# EUROPEAN PATENT APPLICATION

(11) **EP 1 261 203 A2**
(43) Date of publication of application: **27.11.2002**
(21) Application number: 02005765.9
(22) Date of filing: 13.03.2002
(51) Int. Cl.: H04N 7/00

(54) **Portable device**

(30) Priority: 18.04.2001 JP 2001119982
(71) Applicant: Kabushiki Kaisha Toshiba, Minato-ku, Tokyo 105 (JP)
(72) Inventor: Nakamura, Atsushi, K.K. Toshiba, Minato-ku, Tokyo 105-8001 (JP)
(74) Representative: Henkel, Feiler, Hänzel

(57) **Abstract**

A controller (103) of a portable audio player (10) activates a display program (PDC) stored in an internal memory section (104) to execute the GUI function of erasing an incompletely downloaded file having undergone a download failure, i.e., emptying a temporary directory (TMP).

## Description

The present invention relates to a portable device having a file download function, e.g., a portable audio player which handles music files.

When a portable device having a file download function is connected to an arbitrary server to download a file, the file may not be completely downloaded due to some condition on the user side or for some reason, e.g., the radio wave condition of the portable device or an insufficient storage capacity at the download destination.

Conventionally, in this case, a file downloaded halfway is left in the storage medium, and hence the available area of the storage medium is reduced. An incompletely downloaded file of this type that has undergone a download failure exists as a so-called junk file in the storage medium and is not shown to the user. For this reason, the user cannot easily recognize this file.

As described above, in a conventional portable device having a file download function, e.g., a portable audio player that handles music files, incompletely downloaded files that have undergone download failures remain in the storage medium, resulting in a reduction in the available area of the storage medium.

The present invention has been made in consideration of the above situation, and has as its object to provide a portable device having a function of easily erasing an incompletely downloaded file having undergone a download failure with user's operation.

It is another object of the present invention to provide a portable device having the function of allowing a user to arbitrarily select processing of erasing an incompletely downloaded file having undergone a download failure or processing of executing re-downloading following an incompletely downloaded file with simple user's operation.

In order to achieve the above object, according to the first aspect of the present invention, there is provided a portable device comprising first storage means for temporarily storing a file to be downloaded, first designation means for giving an instruction to delete an incompletely downloaded file stored in the first storage means, and instruction means (PDC) for deleting the incompletely downloaded file stored in the first storage means in accordance with the instruction given by the first instruction means.

With the above functions of the present invention, an incompletely downloaded file having undergone a download failure can be easily erased with user's operation. In addition, a device can be easily implemented, which has a function of allowing the user to arbitrarily select the processing of erasing an incompletely downloaded file having undergone a download failure or processing of executing re-downloading following the incompletely downloaded file.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a state transition diagram for explaining a procedure for erasing a file having undergone a download failure according to the present invention;
FIG. 2 is a state transition diagram for explaining a procedure for erasing a file having undergone a download failure according to the present invention;
FIG. 3 is a state transition diagram for explaining a procedure for erasing a file having undergone a download failure according to the present invention;
FIG. 4 is a view showing the arrangement of a temporary director (TMP) and a state where an incompletely downloaded file exists in the above embodiment;
FIG. 5 is a perspective view showing an example of the connection arrangement between a portable audio player and a portable telephone in the embodiment of the present invention.
FIG. 6 is a block diagram showing the arrangement of the main part of a portable audio player in the above embodiment;
FIG. 7 is a flow chart showing a procedure for setting a medium as a download target by using the GUI function in the above embodiment;
FIGS. 8A to 8D are views showing display examples of the GUI function in FIG. 7;
FIG. 9 is a flow chart showing a procedure for erasing an incompletely downloaded file having undergone a download failure (emptying the temporary direction (TMP)) by using the GUI function;
FIGS. 10A to 10E are views showing display examples of the GUI function shown in FIG. 9; and
FIG. 11 is a flow chart for explaining processing up to writing of a file, downloaded in the TMP, in a storage medium 21.

An embodiment of the present invention will be described below with reference to the views of the accompanying drawing.

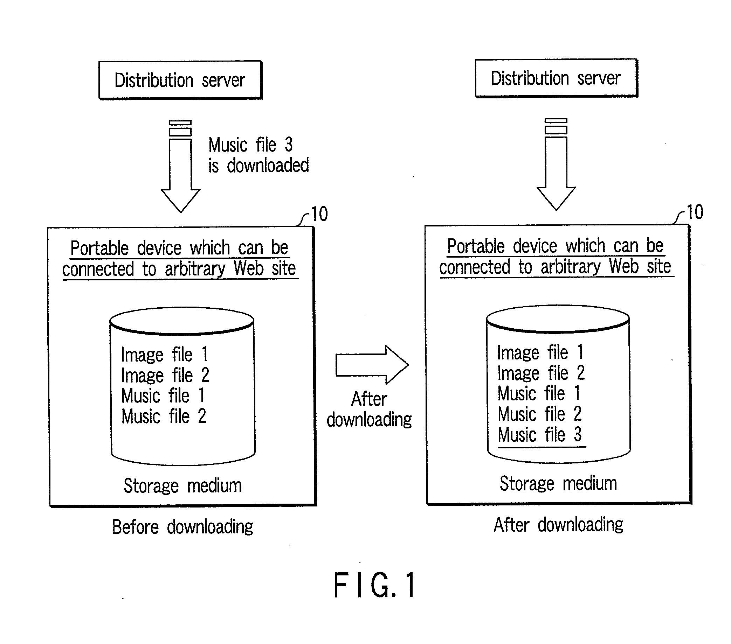

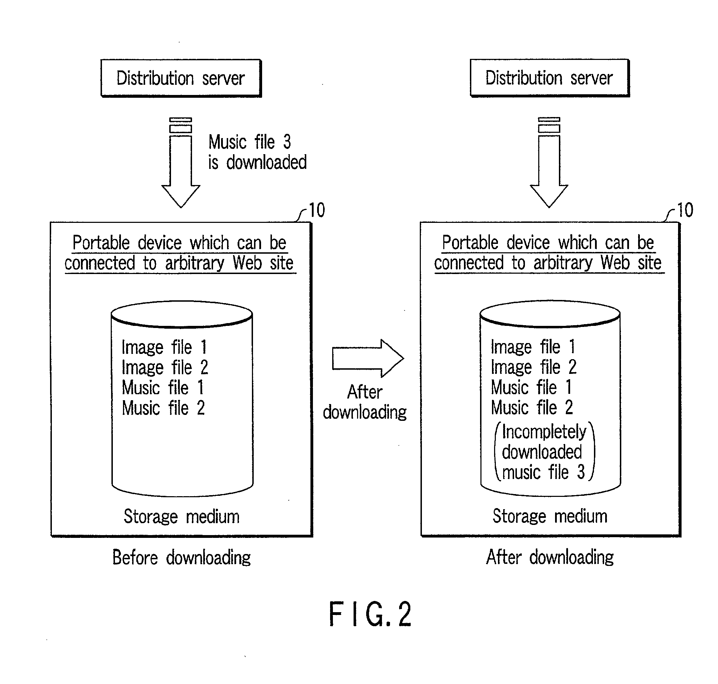

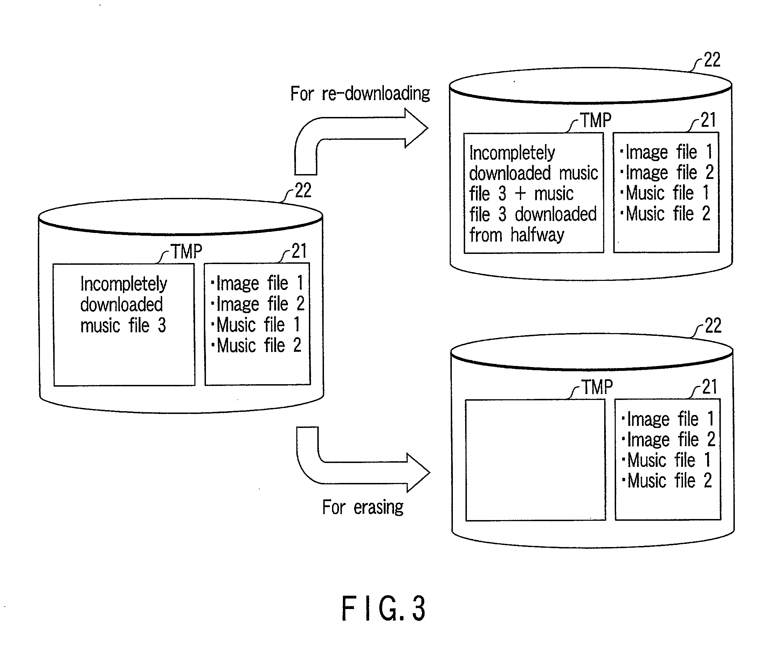

FIGS. 1 to 3 are state transition diagrams for explaining a procedure for erasing a file having undergone a download failure. FIG. 1 is a state transition diagram showing an example of download success. FIG. 2 is a state transition diagram showing a case where downloading is terminated halfway upon a download failure. FIG. 3 is a state transition diagram showing a state where an incompletely downloaded file exists in a storage medium.

In the case shown in FIG. 1, in the portable device capable of acquiring files by downloading them from an arbitrary server, four files, namely image file 1, image file 2, music file 1, and music file 2, are stored in a storage medium for storing downloaded files. As is obvious from the diagram after downloading, in this state, when music file 3 is downloaded and the downloading is normally terminated, music file 3 is written in the above storage medium.

In the case shown in FIG. 2, four files, namely image file 1, image file 2, music file 1, and music file 2, are stored in the storage medium for storing downloaded files. As is obvious from the diagram after downloading, when music file 3 is downloaded and the downloading is terminated halfway due to some cause, incompletely downloaded music file 3 is written in the storage medium.

This file (music file 3) is left as an unusable file (junk file) in the storage medium unless re-downloading or the like is done afterwards.

If an incompletely downloaded file exists as shown in FIG. 2, the device may be reconnected to the arbitrary server to re-download the file or the incompletely downloaded file is deleted without re-downloading.

In this embodiment of the present invention, therefore, a temporary directory (TMP) for temporarily storing one file during downloading until downloading is normally terminated is set, in a storage medium for storing downloaded files, independently of a storage area for storing normally downloaded files. When downloading is normally terminated, the file is shifted to the storage area for storing normally downloaded files. Until downloading is normally terminated, therefore, the file exists in the temporary directory (TMP). FIG. 3 shows this state.

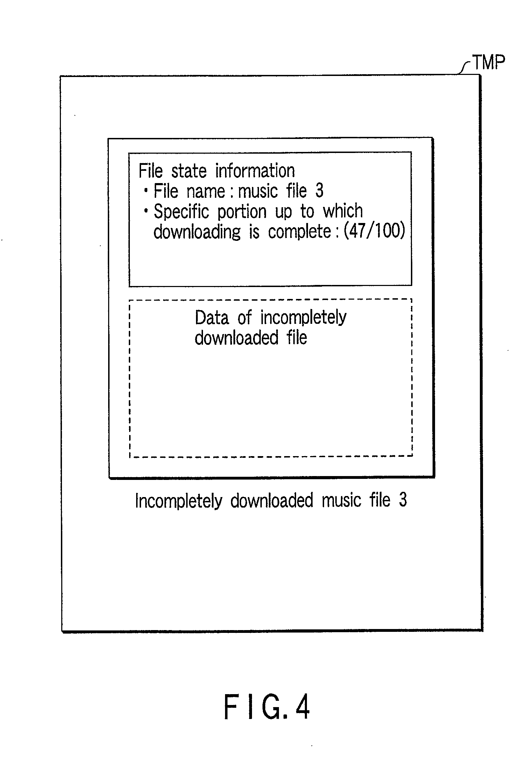

FIG. 4 shows a state where an incompletely downloaded file exists in the above temporary directory (TMP). In this state, as shown in FIG. 4, the incompletely downloaded file (music file 3) and file state (attribute) information containing information indicating a specific portion (e.g., a specific packet) up to which the file is normally downloaded are stored in the temporary directory (TMP).

When the incompletely downloaded file (music file 3) is to be re-downloaded, downloading is started from the position, in the file, at which downloading has stopped. After the downloading is normally terminated, the file (music file 3) is written from the TMP into a storage area 21 for storing normally downloaded files.

If the above re-downloading is not performed, the incompletely downloaded file remains in the temporary directory (TMP). If the user wants to erase the file that is not normally downloaded, he/she may simply empty the temporary directory (TMP). By emptying the temporary directory (TMP), the incompletely downloaded file having undergone the download failure (music file 3 in this case) does not exist in a storage medium 22 for storing downloaded files.

A GUI function for erasing an incompletely downloaded file having undergone a download failure, i.e., emptying the temporary directory (TMP), will be described below.

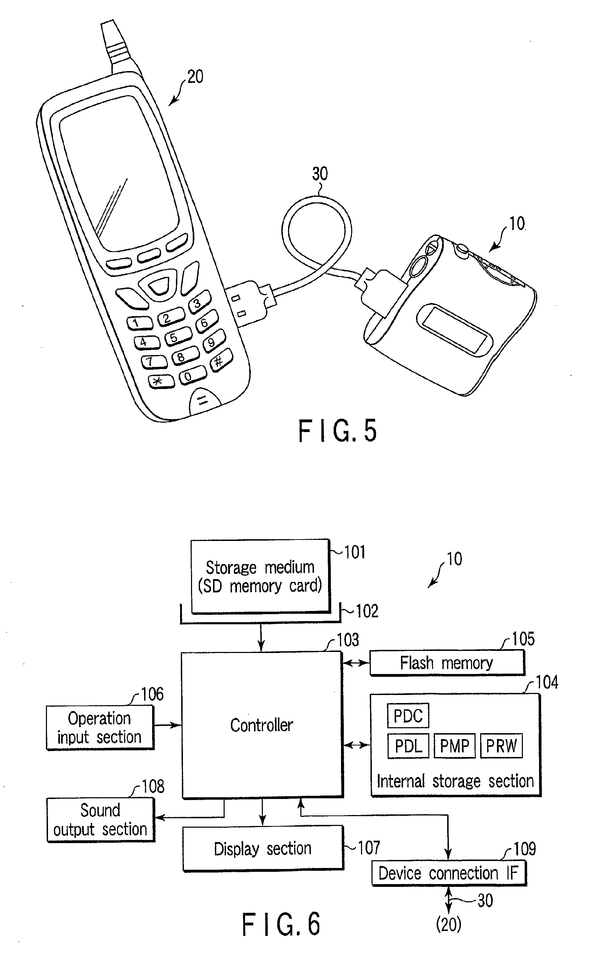

FIG. 5 shows an example of the external appearance of a portable device according to an embodiment of the present invention. More specifically, FIG. 5 shows a connection arrangement between devices in a case where a portable audio player as a portable device is to download a file through a portable telephone.

Referring to FIG. 5, reference numeral 10 denotes a portable audio player having a file download function, which has a function of playing back an arbitrary musical composition from a sound data file (music file) stored in a storage unit using a storage medium or the like and producing sound output.

Reference numeral 20 denotes a portable telephone connected to the connector of the portable audio player 10 through an interface cable 30. A music file is downloaded from a music distribution server or the like (not shown) to the portable audio player 10 through the portable telephone 20 and interface cable 30.

FIG. 6 is a block diagram showing the arrangement of the main part of the portable audio player 10 according to the above embodiment. FIG. 6 shows an arrangement which uses a stamp-size memory card (SD memory card) as a detachable storage medium and a flash memory as a built-in storage medium, and can store music files in these storage media. These storage media correspond to the storage media shown in FIGS. 1 to 3.

The portable audio player 10 shown in FIG. 6 is comprised of a card slot 102 in which a stamp-size memory card (to be referred to as an SD memory card) 101 is inserted, a controller 103 for controlling the overall device, an internal memory section 104 used for program processing, a flash memory 105 serving as a built-in storage medium for storing music files like the SD memory card 101, an operation input section 106 used by the user to, for example, input instructions, an LCD display section 107 for displaying/outputting the title of the currently played musical composition under the control of the controller 103, a sound output section 108 for outputting a playback audio signal under the control of the controller 103, a device connection interface 109 for exchanging information with an external device through the interface cable 30, and the like.

A music program information file constituted by music information (contents) on a composition basis and its attribute information is stored in a predetermined format in the SD memory card 101 inserted in the card slot 102.

The controller 103 executes processing in accordance with various programs stored in the internal memory section 104. In this case, the controller 103 activates a display program (PDC) stored in the internal memory section 104 to erase the above incompletely downloaded file having undergone the download failure. That is, the controller 103 implements the GUI function of emptying the temporary directory (TMP).

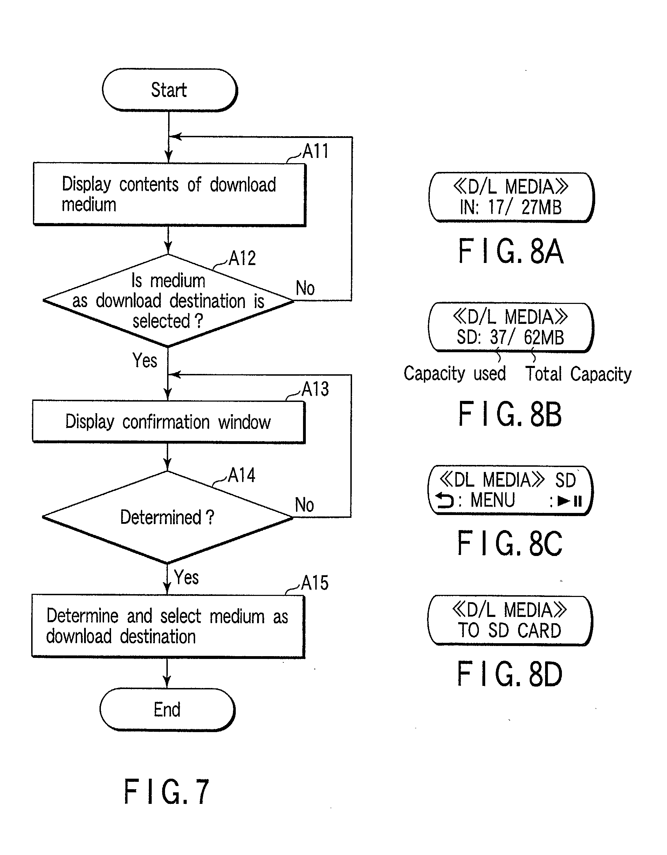

The internal memory section 104 has a program storage area storing various programs to be executed by the controller 103 and a data storage area used for processing executed by the controller 103. In this case, the following programs are stored in the program storage area: a display program (PDC) for GUI display control on the LCD display section 107, a music playback program (PMP) activated when, for example, a power switch (not shown) is turned on or the interface cable 30 is disconnected, a download control program (PDL) activated when, for example, the portable telephone 20 is connected through the interface cable 30, a storage medium reader/writer program (PRW) activated when, for example, the personal computer is connected through the interface cable 30, and the like. In this embodiment, when the controller 103 executes the above display program (PDC), the GUI function shown in FIGS. 7 to 10A to 10E (to be described later) is implemented.

Like the SD memory card 101, the flash memory 105 can store a plurality of music files, image files, and the like. The above SD memory card 101 is a detachable storage medium, whereas the flash memory 105 is a built-in storage medium (standard equipment). Each of these storage media including the SD memory card 101 and flash memory 105 can store music files downloaded through the portable telephone 20. In this case, downloading can be performed upon designation of a storage medium (upon selection of the SD memory card 101/flash memory 105). These storage media (the SD memory card 101 and flash memory 105) correspond to the storage media shown in FIGS. 1 to 3.

The operation input section 106 is constituted by buttons and the like operated by the user and used to, for example, select a musical composition, play it back, and control its volume, and is also used to edit (for example, erase or change the playback order of musical compositions) of a music file stored in the SD memory card 101, flash memory 105, or the like. In this embodiment, the operation input section 106 is used to erase the above incompletely downloaded file having undergone the download failure, i.e., to operate the buttons and the like of the GUI function for emptying the temporary directory (TMP).

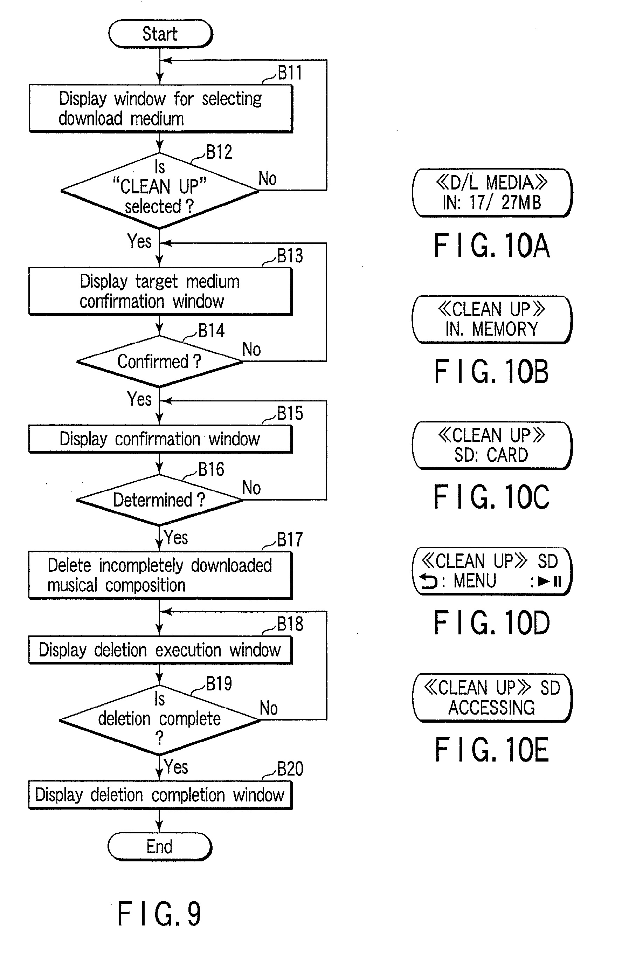

The LCD display section 107 displays the title of a musical composition acquired from a music file, download state, and the like by using a font corresponding to the character code set handled in the device under the control of the controller 103. In this embodiment, the LCD display section 107 displays windows like those shown in FIGS. 8A to 8D and 10A to 10E as the GUI function for emptying the above temporary directory (TMP).

The sound output section 108 decodes music information (contents) corresponding to the title of the musical composition designated by the operation input section 106 to be played under the control of the controller 103, and outputs the resultant information as a playback audio signal to, for example, a headphone terminal.

The device connection interface 109 exchanges information with an external device through the interface cable 30. In this case, the device connection interface 109 exchanges information for download processing including power supply control with the portable telephone 20 through the interface cable 30.

FIG. 7 is a flow chart showing a procedure for setting a medium as a download target by using the GUI function in this embodiment.

FIGS. 8A to 8D show display examples of the GUI function in FIG. 7. In this case, the SD memory card 101 is displayed as "SD CARD", and the flash memory 105 is displayed as "IN MEMORY".

FIG. 9 is a flow chart showing a procedure for erasing the above incompletely downloaded file having undergone the download failure, i.e., emptying the temporary direction (TMP).

FIGS. 10A to 10E show display examples of the GUI function in FIG. 9.

A procedure for erasing an incompletely downloaded file having undergone a download failure, i.e., emptying the temporary directory (TMP), by using the GUI function in this embodiment of the present invention will be described below with reference to FIGS. 5 and 10A to 10E.

When a distribution file is to be downloaded through the portable telephone 20 by device connection like that shown in FIG. 5, a medium as a download target is designated. In this case, as selection target media, the SD memory card 101 and flash memory 105 are present. The SD memory card 101 is displayed as "SD" or "SD CARD" on the LCD display section 107, as shown in FIGS. 8A to 8D and 10A to 10E, whereas the flash memory 105 is displayed as "IN" or "IN MEMORY" on the LCD display section 107, as shown in FIGS. 8A to 8D and 10A to 10E.

According to the procedure for designating a medium as a download target, on a menu for designating a download target medium, the user selects the SD memory card 101 or flash memory 105 as a download target medium (steps A11 and A12 in FIG. 7). In this case, if the affirmative button is pressed under the display condition shown in FIG. 8A, the flash memory 105 is selected as a download target medium. If the affirmative button is pressed under the display condition shown in FIG. 8B, the SD memory card 101 is selected as a download target medium.

When a download target medium is selected in this manner, the confirmation window shown in FIG. 8C is displayed on the LCD display section 107 (step A13 in FIG. 7). The display shown in FIG. 8C is a confirmation window displayed when the SD memory card 101 is selected as a download target medium.

If the affirmative button is pressed in this state (step A14 in FIG. 7), the determination window shown in FIG. 8D is displayed on the LCD display section 107 (step A15 in FIG. 7). With this operation, designation of a download target medium is completed. Subsequently, a downloaded file is written in the medium determined in this processing (SD memory card 101/flash memory 105).

A procedure for erasing an incompletely downloaded file having undergone a download failure, i.e., emptying the temporary director (TMP), by using the GUI function will be described next with reference to FIG. 10A to 10E.

In this case, as shown in FIG. 10A, after a menu for designating a download target medium is selected, a pre-assigned menu button is pressed to select "CLEAN UP" (steps B11 and B12 in FIG. 9). With this operation, a clean mode of deleting incompletely downloaded file which is an unnecessary file is set.

If the affirmative button is pressed under the display condition shown in FIG. 10B, the flash memory 105 is selected as a medium from which the incompletely downloaded file is erased. If the affirmative button is pressed under the display condition ("SD CARD") shown in FIG. 10C, the SD memory card 101 is selected as a medium from which an incompletely downloaded file is erased.

When a medium from which an incompletely downloaded file is to be erased is selected in this manner, the confirmation window shown in FIG. 10D is displayed on the LCD display section 107 (steps B13 and B14 in FIG. 9). The display shown in FIG. 10D is the confirmation window displayed when the SD memory card 101 is selected as a download target medium.

If the affirmative button is pressed in this state (step B16 in FIG. 9), the processing of emptying the temporary directory (TMP) is executed in the above manner, and a window indicating that an incompletely downloaded file is erased like the one shown in FIG. 10E is displayed on the LCD display section 107 (steps B17 and B18 in FIG. 7).

When the incompletely downloaded file is erased in this case, the word "FINISH" indicating that the incompletely downloaded file is completely erased is displayed on the LCD display section 107 for a predetermined period of time (step B20 in FIG. 7).

With the above GUI function, an incompletely downloaded file having undergone a download failure can be easily erased by user's operation. In addition, a device having a function of allowing the user to arbitrarily select the processing of erasing an incompletely downloaded file having undergone a download failure or the processing of re-downloading an incompletely downloaded file by simple user's operation can be easily realized.

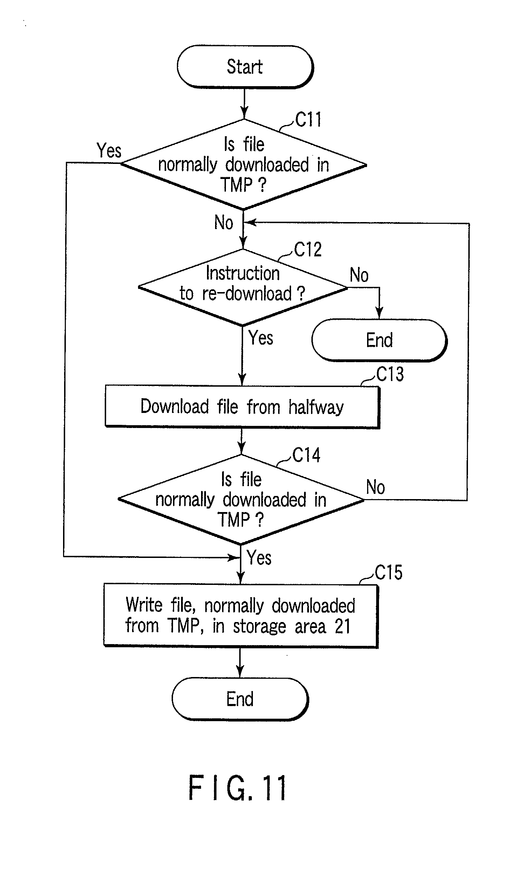

A procedure for writing a file downloaded in the TMP is written in the storage area 21 will be described next with reference to the flow chart of FIG. 11.

When the file is completely downloaded, it is checked whether the file is normally download in the TMP (step C11).

If it is determined in step C11 that the file is not normally downloaded in the TMP, it is checked whether an instruction to re-download the file is generated (step C12).

If it is determined in step C12 that no instruction to re-download is generated, the processing is terminated. Subsequently, for example, a file stored in the TMP is deleted, as described above.

If it is determined in step C12 that an instruction to re-download is generated, data is downloaded following the incompletely downloaded file stored in the TMP (step C13).

It is then checked whether the file is normally downloaded (step C14). If it is determined in step C14 that the file is not normally downloaded, the flow advances to step C12.

If it is determined in step C14 that the file is normally downloaded in the TMP, the flow advances to step C15. If it is determined in step C11 that the file is normally downloaded in the TMP, the flow advances to step C15.

In step C15, the normally downloaded file is written from the TMP into the storage area 21.

In the portable device of this embodiment, since a file to be downloaded is temporarily stored in the TMP, even if a download failure occurs, the file stored in the TMP can be deleted. This makes it possible to effectively use the memory area.

## Claims

1. A portable device **characterized by** comprising:
first storage means (TMP) for temporarily storing a file to be downloaded;
first designation means (106, 107) for giving an instruction to delete an incompletely downloaded file stored in said first storage means; and
instruction means (PDC) for deleting the incompletely downloaded file stored in said first storage means in accordance with the instruction given by said first instruction means.

2. A device according to claim 1, **characterized by** further comprising second storage means (21) which stores a file normally downloaded in said first storage means.

3. A device according to claim 1, **characterized by** further comprising:
second instruction means for giving an instruction to re-download an incompletely downloaded file having undergone a download failure; and
execution means for executing re-downloading following the incompletely downloaded file temporarily stored in said first storage means in accordance with the instruction given by said second instruction means.

4. A device according to claim 1, **characterized in that** the file is a music file..

5. A device according to claim 1, **characterized by** further comprising:
a plurality of second storage means (101, 105) which store files normally downloaded in said first storage means; and
designation means for designating one of said plurality of second storage means as a download destination.

6. A device according to claim 5, **characterized in that** said plurality of storage means include a memory card and a flash memory.

7. A device according to claim 1, **characterized in that** the file is downloaded through a portable telephone.

8. A file downloading method for a portable device including first storage means for temporarily storing an incompletely downloaded file, and second storage means which stores a file normally downloaded in said first storage means, **characterized by** comprising:
determining whether a file is normally downloaded in said first storage means; and
if it is determined that the file is normally downloaded in the first storage means, writing the normally downloaded file in the second storage means.

9. A method according to claim 8, **characterized by** further comprising:
if it is determined that the file is not normally downloaded in the first storage means, determining whether an instruction to re-download is given; and
if it is determined that the instruction to re-download is given, executing re-downloading following an incompletely downloaded file stored in the first storage means.

10. A method according to claim 8, **characterized in that** the file is a music file.

11. A method according to claim 8, **characterized in that** the file is downloaded through a portable telephone.

12. A method according to claim 8, **characterized in that** the second storage means is designated by a user.
